# DEMANDE DE BREVET EUROPEEN

(11) **EP 4 538 489 A1**
(43) Date de publication de la demande: **16.04.2025**
(21) Numéro de dépôt: 24205972.3
(22) Date de dépôt: 10.10.2024
(51) Int. Cl.: E05D 3/18, E05D 11/00, E05D 3/14, E05D 7/10, B05B 13/02, B62D 65/02

(54) **FAUSSE PAUMELLE POUR PORTE LATÉRALE DE VÉHICULE COULISSANTE**

(30) Priorité: 10.10.2023 FR 2310847
(71) Demandeur: COUTIER INDUSTRIE, 57970 Basse-Ham (FR)
(72) Inventeur: PELSER, Christian, 57970 BASSE-HAM (FR); COUTIER, Charles, 57970 BASSE-HAM (FR); COUTIER, Virginie, 57970 BASSE-HAM (FR)
(74) Mandataire: Cabinet Boettcher

(57) **Abrégé**

L'invention concerne une fausse charnière pour relier provisoirement en rotation verticale un ouvrant latéral (3) de véhicule avec un bord avant (3a) à une structure (2) de ce dernier, comportant une première pièce ou paumelle (4) pourvue d'un premier élément d'articulation (5) et d'une platine (6) de sa fixation à la structure (2), écartée de ce premier élément (5) et une deuxième pièce ou paumelle (7) pourvue d'un second élément d'articulation (8) apte à coiffer ou accueillir le premier (5) et d'une platine (9) de sa fixation à l'ouvrant (3), écartée de ce second élément (8), caractérisé en ce que le premier élément d'articulation (5) est porté par une biellette (10) montée à pivotement sur la première paumelle (4) tandis que le second élément 8) d'articulation est porté par la seconde paumelle (7) et en ce que la première (4) et la seconde (7) paumelles possèdent des moyens d'accouplement (11, 12) tels que la manœuvre de l'ouvrant (3) impose à la biellette, donc au premier moyen d'articulation (5), un mouvement autour de son pivot qui conduit à une rotation de l'ouvrant (3) autour d'un axe virtuel vertical sensiblement fixe .

## Description

La présente invention concerne un moyen de liaison temporaire interposé entre le châssis d'un véhicule automobile et une portière qui, notamment mais non exclusivement, sera montée définitivement coulissante sur ce véhicule.

### ARRIERE PLAN DE L'INVENTION

Ce moyen de liaison est provisoire; il est utilisé principalement lors des traitements de surface de la carrosserie du véhicule (cataphorèse et/ou peinture par exemple) ; il permet, d'une part, le maintien de la portière dans son état de fermeture et, d'autre part l'éloignement de cette portière par rapport au châssis du véhicule.

Ce type d'organes est bien connu dans le domaine de la carrosserie automobile. Il est appelé fausse-charnière ou fausse-paumelle. Il permet de traiter en même temps la carrosserie de la voiture et la portière qui lui est fixée temporairement avant qu'elle ne soit montée de manière définitive à coulissement ou à pivotement. Or, le montage définitif ne peut être réalisé qu'après le traitement; un montage définitif préalable à ces opérations fait de la porte (notamment coulissante) un obstacle à leur bonne exécution.

En général, l'articulation provisoire d'une porte sur la structure du véhicule est réalisée autour d'un axe dont la position par rapport à la carrosserie est telle que la porte n'entre pas en conflit, lors de l'ouverture et la fermeture de la porte, avec les éléments de carrosserie déjà en place comme la portière avant. Pour résoudre ce problème, on utilise des outils connus du genre écarteur qui autorisent un mouvement de pivotement de la porte précédé ou suivi d'un déplacement de celle-ci parallèlement à elle-même vers l'extérieur ou l'intérieur du véhicule et dans le sens longitudinal de ce dernier, vers l'arrière ou l'avant de ce dernier, selon qu'il s'agit de l'ouverture ou de la fermeture de la porte. Cette cinématique, mise en oeuvre par des outils lourds et complexes, demande de disposer d'un environnement immédiat du véhicule dans lequel s'opère le « déboîtement » de la porte avant ou après son pivotement, suffisamment libre. Or, ce type d'outil n'est pas toujours utilisable.

Il a fallu donc abandonner le principe des écarteurs pour employer de fausses paumelles à rotules, dont la technique est connue et intéressante en ce qu'elle permet un dégondage rapide.

### OBJET DE L'INVENTION

Un but de l'invention est de permettre une utilisation plus étendue des fausses paumelles.

### BREF EXPOSE DE L'INVENTION

A cet effet, l'invention a pour objet une fausse paumelle pour relier provisoirement en rotation autour d'un premier axe sensiblement vertical un ouvrant latéral de véhicule à une structure de ce dernier, comportant une première partie de paumelle comprenant un premier élément d'articulation et une première platine écartée du premier élément d'articulation et agencée pour sa fixation à la structure du véhicule, et une seconde partie de paumelle comprenant un second élément d'articulation apte à coiffer ou accueillir le premier élément d'articulation et une seconde platine écartée de ce second élément d'articulation et agencée pour sa fixation à l'ouvrant. La première partie de paumelle comporte une biellette primaire qui porte le premier élément d'articulation et qui est montée à pivotement autour d'un deuxième axe sensiblement vertical par rapport à la première partie de paumelle et en ce que la première partie de paumelle et la seconde partie de paumelle possèdent des moyens d'accouplement tels que la manoeuvre de l'ouvrant impose à la biellette, donc au premier élément d'articulation, un mouvement autour du deuxième axe qui conduise à une rotation de l'ouvrant autour d'un troisième axe, virtuel, vertical et sensiblement fixe.

De préférence, les moyens d'accouplement susdits sont déterminés pour que l'axe virtuel de rotation de l'ouvrant soit sensiblement confondu avec un bord avant de ce dernier. De préférence, les moyens d'accouplement susdits sont déterminés pour que l'axe virtuel de rotation de l'ouvrant soit sensiblement confondu avec un bord arrière de ce dernier.

Dans un premier mode de réalisation, les moyens d'accouplement de la première partie de paumelle à la seconde partie de paumelle sont constitués par une lumière ménagée dans la première partie de paumelle et apte à recevoir à coulissement un doigt solidaire de la seconde partie de paumelle.

Dans un second mode de réalisation, les moyens d'accouplement des deux parties de paumelle sont constitués par une biellette secondaire articulée à chacune d'elles. D'autres caractéristiques et avantages ressortiront de la description donnée ci-après d'exemples de réalisation de l'invention.

### BREVE DESCRIPTION DES DESSINS

Il sera fait référence aux dessins annexés, parmi lesquels :
[Fig 1] La figure 1 est une vue en perspective d'un premier mode de réalisation d'une fausse paumelle installée entre un ouvrant et un pied de carrosserie de véhicule,
[Fig 2] La figure 2 est un schéma illustrant en vue de dessus la cinématique de ce premier mode de réalisation, la fausse-paumelle étant dans un état fermé,
[Fig 3] La figure 3 est une vue en perspective d'un deuxième mode de réalisation d'une fausse paumelle installée entre un ouvrant et un pied de carrosserie de véhicule,
[Fig 4] La figure 4 est un schéma illustrant en vue de dessus la cinématique de ce deuxième mode de réalisation, la fausse-paumelle étant dans un état fermé,
[Fig 5] La figure 5 est une vue en perspective d'une variante du premier mode de réalisation en position fermée,
[Fig 6] La figure 6 est une vue en perspective de cette variante du premier mode de réalisation en position ouverte,
[Fig 7] La figure 7 est une vue en perspective de cette variante du premier mode de réalisation en position ouverte, selon un angle de vue différent, dans un état démonté,
[Fig 8] La figure 8 est une vue en perspective d'une variante du deuxième mode de réalisation en position fermée,
[Fig 9] La figure 9 est une vue en perspective de cette variante du deuxième mode de réalisation en position ouverte,
[Fig 10] La figure 10 est une vue en perspective de cette variante du deuxième mode de réalisation en position ouverte, selon un angle de vue différent, dans un état démonté.

### DESCRIPTION DETAILLEE DE L'INVENTION

On rappellera en préambule qu'un ouvrant latéral de véhicule concerné par l'invention est supporté par deux fausses paumelles, l'une haute et l'autre basse qui mettent en oeuvre de manière connue des articulations à rotule qui permettent, notamment, entre autres avantages, leur dégondage aisé. Il suffit donc de soulever l'ouvrant pour le séparer de la structure sur laquelle il était provisoirement articulé. Il n'est illustré, dans ce qui suit, qu'une seule de ces fausses paumelles.

On indiquera également que la structure du véhicule à laquelle est attaché l'ouvrant est formée par un pied central qui est recouvert pour partie par le bord arrière de la portière avant du véhicule et pour partie par le bord avant de la porte latérale coulissante.

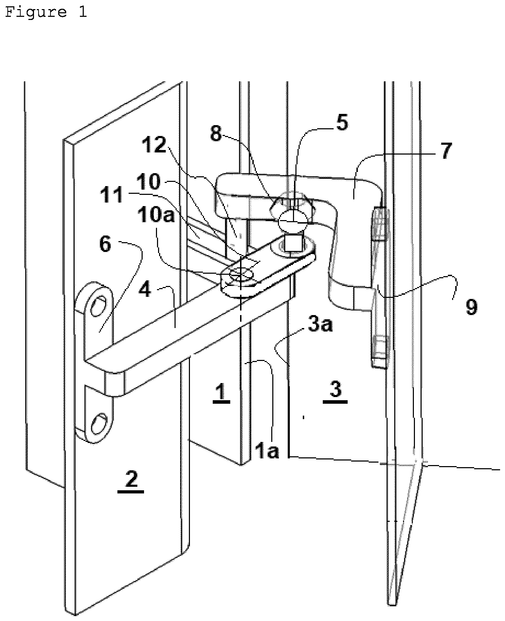

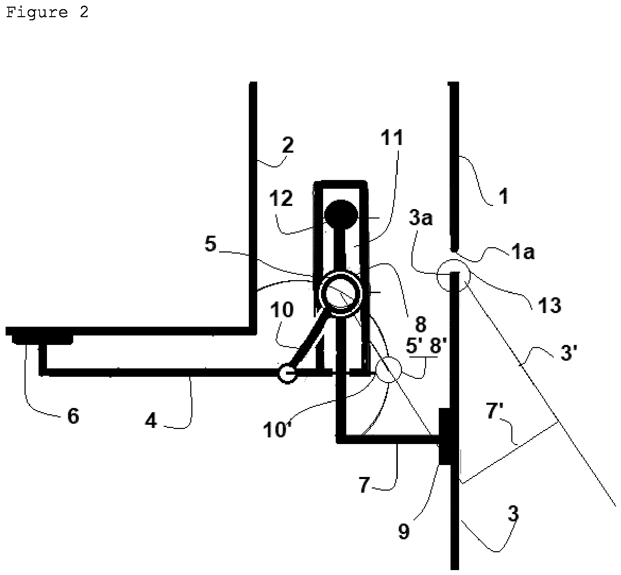

Aux figures 1 et 2, le bord arrière de la portière avant 1 du véhicule, en position fermée, est noté 1a. Le pied central de la carrosserie porte la référence 2 tandis que l'ouvrant coulissant et concerné par les fausses paumelles est noté 3 avec un bord avant 3a.

La fausse paumelle selon l'invention comporte une première partie de paumelle 4 et une seconde partie de paumelle 7. La première partie de paumelle comporte un premier élément d'articulation, ici une rotule sphérique 5, et une première platine 6 écartée de la rotule 5 et agencée pour sa fixation à la structure, ici au pied central 2. La seconde partie de paumelle 7 comporte un second élément d'articulation, ici un logement conique 8 apte à coiffer la rotule 5 pour définir au moins un premier axe de rotation sensiblement vertical, et une seconde platine 9 écartée de ce logement 8 et agencée pour sa fixation à l'ouvrant. On notera que ce n'est pas sortir du cadre de l'invention que d'inverser les éléments d'articulation, à savoir de faire porter la rotule par la seconde partie de paumelle et ménager le logement dans la première partie de paumelle.

On constate sur ces figures que la rotule 5 n'est pas directement portée par la première platine 6 mais par une biellette 10 qui est montée à pivotement par son extrémité 10a opposée à la rotule 5 sur la première platine 6 autour d'un deuxième axe de rotation sensiblement vertical. La première partie de paumelle 4 et la seconde partie de paumelle 7 sont donc articulées l'une à l'autre par l'articulation à rotule dont la position de l'axe de rotation n'est pas contrôlée. Selon l'invention, les deux parties de paumelle 4 et 7 possèdent des moyens d'accouplement qui impose à la biellette 10, donc à la rotule 5, un mouvement autour du deuxième axe de rotation qui conduise à une rotation de l'ouvrant autour d'un troisième axe virtuel vertical sensiblement fixe. Dans le cas de la figure 1, ces moyens comprennent une lumière 11ménagée dans la première partie de paumelle 4 dans une direction ici sensiblement parallèle au plan de la portière avant 1, devant le pied 2 et un doigt fixe 12, porté par la seconde partie de paumelle 7 et apte à coulisser dans la lumière 11. On remarque que ces moyens d'accouplement sont désolidarisés l'un de l'autre quand on dégonde l'ouvrant en le soulevant.

Cette combinaison de moyens permet, en déterminant la géométrie et les dimensions des différentes pièces qui la constituent, d'obtenir un mouvement d'ouverture de l'ouvrant 3 autour d'un axe virtuel vertical que l'on peut contraindre à ne se trouver que dans un espace cylindrique restreint, et de préférence au voisinage du bord 3a de l'ouvrant 3 si bien que l'on peut ainsi maîtriser le mouvement de ce bord avant et le conserver au plus près du bord arrière 1a de la portière 1 sans qu'il y ait contact entre eux lors de la rotation de l'ouvrant provisoirement articulé.

Cette zone de confinement est indiquée en 13 sur la figure 2 qui est un schéma du plan dans lequel s'opèrent les mouvements des différents composants de cette fausse charnière et sur lequel on a reporté les éléments déjà décrits avec les mêmes références. Bien entendu, les contraintes de construction la forme et la cinématique des pièces en mouvement peuvent ne pas permettre d'assurer ce confinement pour la totalité du mouvement de l'ouvrant. Il suffit, au sens de l'invention, que ce confinement soit assuré pour la rotation (par exemple 30 degrés) de l'ouvrant dans la zone de proximité avec la portière avant 1. On a représenté en traits fins sur ce schéma, la position de l'ouvrant (et l'état de la charnière) correspondant à la position et l'état de la figure 1. Les références des éléments sont affectées d'une apostrophe (ou « prime »). Dans ce mode de réalisation, les extrémités de la lumière 11forme des butées latérales, à savoir une butée latérale à l'ouverture permettant de limiter l'amplitude d'ouverture de la fausse-paumelle et une butée latérale à la fermeture permettant de limiter l'amplitude de fermeture de la fausse-paumelle lorsque le doigt 12 vient en butée contre ces extrémités. La butée latérale à la fermeture est particulièrement intéressante car elle permet d'empêcher un contact de l'ouvrant avec la carrosserie.

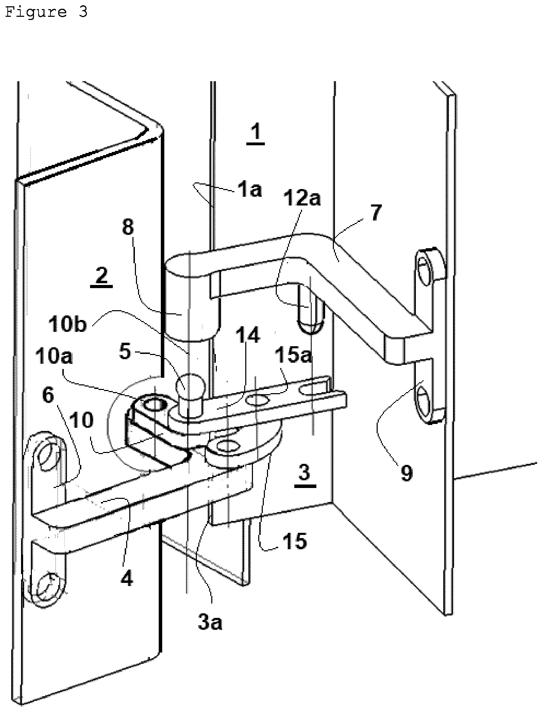

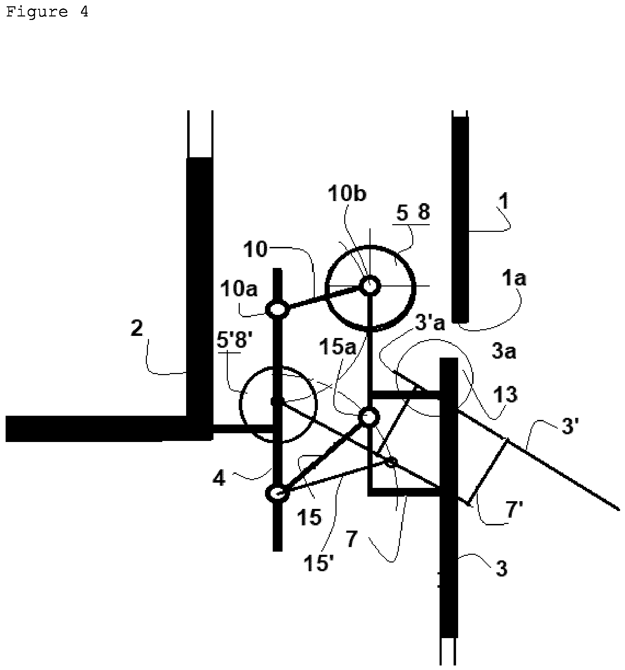

Les figures 3 et 4 illustrent un deuxième mode de réalisation. On y retrouve des éléments déjà décrits avec les mêmes références. Dans cette figure, la rotule 5 est portée par l'extrémité d'un bras 14, articulée sur la biellette 10. L'axe 10b de cette articulation est confondu avec l'axe de la rotule 5 si bien que celle-ci décrit, comme dans l'exemple de réalisation précédent, un mouvement autour du pivot de la biellette 10. L'autre extrémité du bras 14 est apte à recevoir un doigt fixe 12a semblable à celui décrit précédemment, porté par la seconde partie de paumelle 7 qui donc en permet la manoeuvre lorsque l'on manipule l'ouvrant 3 portant la seconde partie de paumelle 7. Ce bras 14 est en outre, articulé à l'extrémité d'une biellette secondaire 15 dont l'autre extrémité est montée à pivotement sur la première partie de paumelle 4. L'axe d'articulation 15a du bras 14 sur la biellette secondaire 15 est situé entre le doigt 12a et l'axe 10b de la rotule. La géométrie de cet embiellage est, comme précédemment, calculé ou déterminé en fonction du mouvement désiré du bord avant 3a de l'ouvrant 3 circonscrit dans la zone de confinement.

La figure 4 est un schéma similaire de celui de la figure 2, illustrant la configuration vue en plan de la fausse charnière de la figure 3. Les éléments déjà décrits y portent les mêmes références. Sur ce schéma, on a représenté en traits fins l'état de la fausse charnière correspondant à l'état représenté à la figure 3. Les références des éléments dans cette position portent une apostrophe ou signe « prime ».

On notera que la présence du bras 14 intermédiaire entre la paumelle 7 et les biellettes 10 et 15 n'est due qu'à des considérations de fabrication. En effet, on peut obtenir la même cinématique de fonctionnement en l'absence de ce bras, la paumelle 7 venant directement coiffer la rotule 5, la biellette 15 étant directement articulée en 15a sur la seconde partie de paumelle 7. C'est le schéma représenté à la figure 4.

Dans les deux modes de réalisation, la fausse-paumelle est dite dégondable en car le logement 8 est dépourvue de toute butée s'opposant à l'extraction de la rotule 5 hors du logement 8. Cette butée peut être un jonc monté à l'entrée du logement 8 après introduction de la rotule 5 pour s'opposer à l'extraction de la rotule 5.

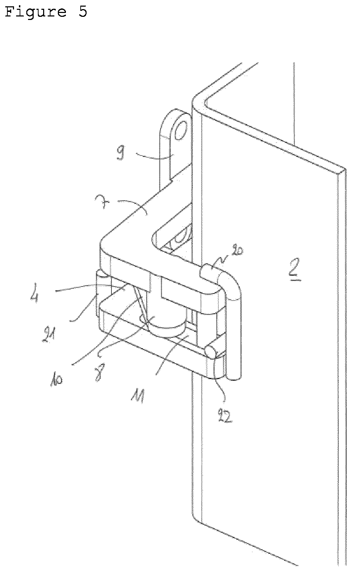

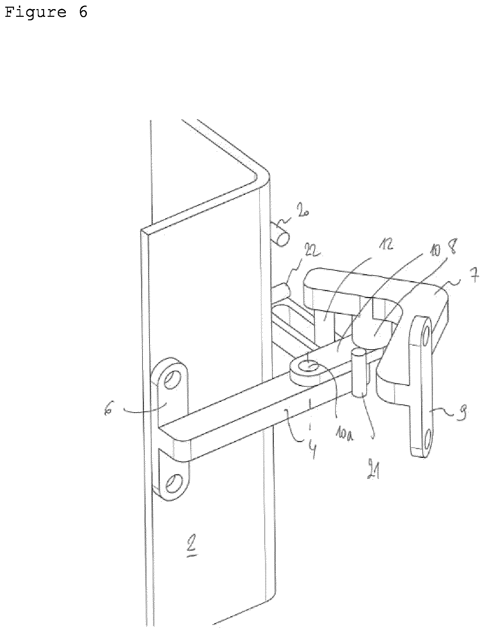

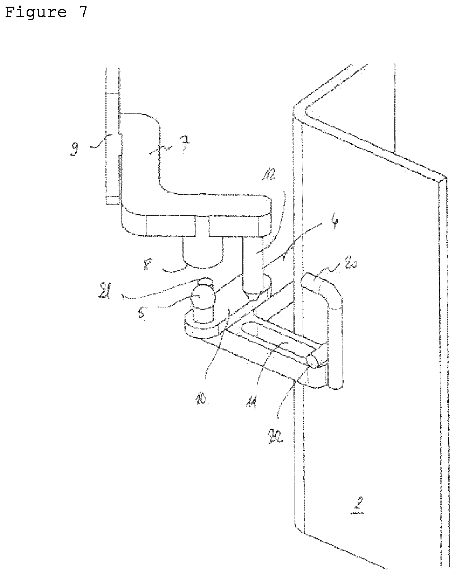

Dans la variante des figures 5 à 7, relative au premier mode de réalisation, on a prévu sur la première partie de paumelle 4 une butée supérieure 20 sous laquelle passe une portion de la seconde partie de la paumelle 7 lorsque la fausse paumelle est dans son état fermé ou dans un état proche de cet état fermé (figure 5). La butée supérieure 20 s'oppose alors à un déplacement vers le haut de la seconde partie de paumelle 7 et donc à un dégondage de la fausse-paumelle. Lorsque la fausse-paumelle est dans son état ouvert ou dans un état proche de l'état ouvert (figure 6), la seconde partie de paumelle 7 échappe à la butée supérieure 20 qui ne s'oppose plus à un déplacement vers le haut de la seconde partie de paumelle 7 et autorise donc le dégondage de la fausse-paumelle (figure 7). La butée supérieure 20 est ici l'extrémité libre coudée d'un doigt s'étendant verticalement depuis la première partie de paumelle 4. La butée supérieure 20 permet donc une indégondabilité de la fausse-paumelle sur une partie de la course de la seconde partie de paumelle 7.

Dans cette variante, on a également prévu des butées latérales 21 et 22, à savoir une butée latérale à l'ouverture 21 permettant de limiter l'amplitude d'ouverture de la fausse-paumelle et une butée latérale à la fermeture permettant de limiter l'amplitude de fermeture de la fausse-paumelle. Les butées latérales 21, 22 sont fixées sur la première partie de paumelle 4 pour rentrer en contact avec la biellette 10 dans les deux positions extrêmes de la seconde partie de paumelle 7. La butée latérale à la fermeture 22 est particulièrement intéressante car elle permet d'empêcher un contact de l'ouvrant avec la carrosserie.

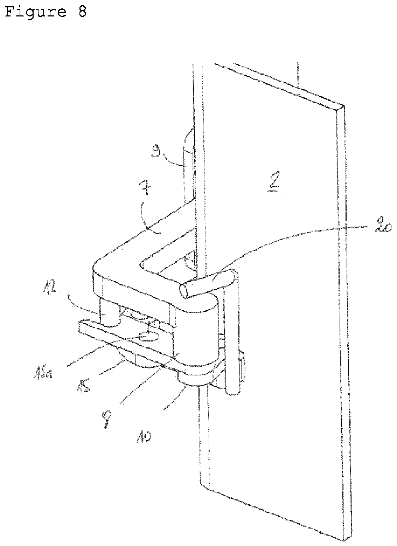

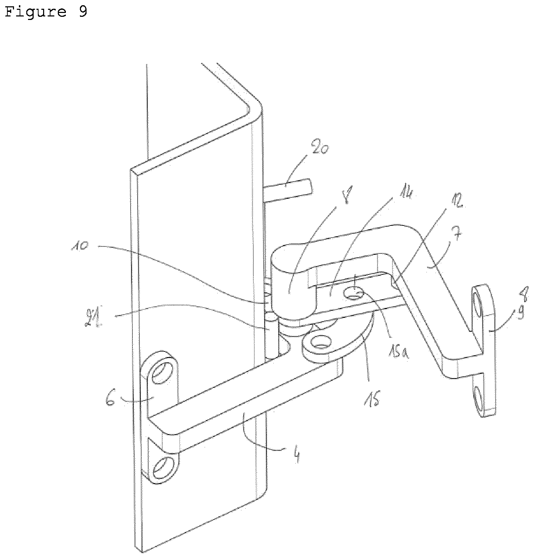

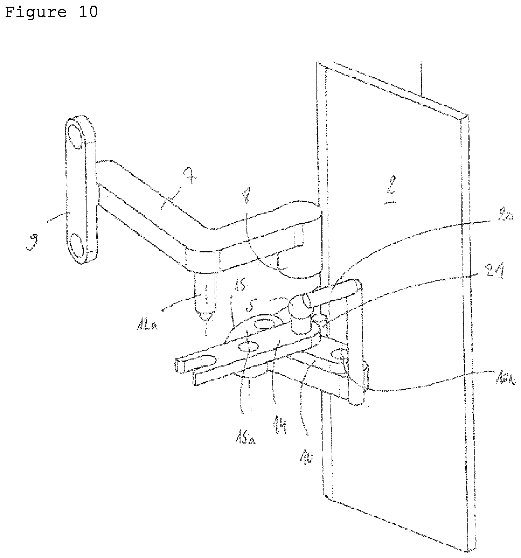

Dans la variante des figures 8 à 10, relative au deuxième mode de réalisation, on a prévu sur la première partie de paumelle 4 une butée supérieure 20 sous laquelle passe une portion de la seconde partie de la paumelle 7 lorsque la fausse paumelle est dans son état fermé ou dans un état proche de cet état fermé (figure 8). La butée supérieure 20 s'oppose alors à un déplacement vers le haut de la seconde partie de paumelle 7 et donc à un dégondage de la fausse-paumelle. Lorsque la fausse-paumelle est dans son état ouvert ou dans un état proche de l'état ouvert (figure 9), la seconde partie de paumelle 7 échappe à la butée supérieure 20 qui ne s'oppose plus à un déplacement vers le haut de la seconde partie de paumelle 7 et autorise donc le dégondage de la fausse-paumelle (figure 10). La butée supérieure 20 est ici l'extrémité libre coudée d'un doigt s'étendant verticalement depuis la première partie de paumelle 4. La butée supérieure 20 permet donc une indégondabilité de la fausse-paumelle sur une partie de la course de la seconde partie de paumelle 7.

Dans cette variante, on a également prévu une butée latérale à l'ouverture 21 permettant de limiter l'amplitude d'ouverture de la fausse-paumelle. La butée latérale 21 est fixée sur la première partie de paumelle 4 pour rentrer en contact avec la biellette 10 dans la position extrême d'ouverture de la seconde partie de paumelle 7.

Bien entendu, l'invention n'est pas limitée aux modes de réalisation décrits mais s'applique à toute variante entrant dans le champ l'invention telle que définie par les revendications.

Dans le cas où deux fausses paumelles sont utilisées (une supérieure et une inférieure), la seconde partie de paumelle peut être en appui sur la première partie de paumelle soit sur l'une ou l'autre des deux fausses-paumelles, soit sur les deux fausses-paumelles.

Dans le cas de véhicules à portes antagonistes (carrosserie dépourvue de pied), il est possible d'agencer la fausse-paumelle pour fixer la fausse-paumelle à l'arrière de la carrosserie et avoir axe un virtuel du côté du bord arrière de l'ouvrant.

L'invention s'applique aux fausses paumelles dégondables ou indégondables.

L'invention est applicable aux véhicules à pied central apparent ou aux véhicules sans pied (portes antagonistes et articulation au bord arrière de la porte arrière).

## Revendications

1. Fausse paumelle pour relier provisoirement en rotation autour d'un axe sensiblement vertical un ouvrant latéral (3) de véhicule à une structure (2) de ce dernier, comprenant une première partie de paumelle (4) comportant un premier élément d'articulation (5), à savoir une rotule, et une première platine (6) écartée du premier élément d'articulation (5) et agencée pour sa fixation à la structure (2), et une seconde partie de paumelle (7) comportant un second élément d'articulation (8) apte à coiffer ou accueillir le premier élément d'articulation (5) et une seconde platine (9) écartée du second élément d'articulation (8) et agencée pour sa fixation à l'ouvrant (3), **caractérisé en ce que** la première partie de paumelle (4) comporte une biellette (10) qui porte le premier élément d'articulation (5) et qui est montée à pivotement autour d'un axe sensiblement vertical par rapport à la première platine et **en ce que** la première partie de paumelle (4) et la seconde partie de paumelle (7) possèdent des moyens d'accouplement (11, 12, 12a, 15) tels que la manoeuvre de l'ouvrant (3) impose à la biellette, donc au premier élément d'articulation (5), un mouvement autour de son pivot qui conduit à une rotation de l'ouvrant (3) autour d'un axe virtuel vertical sensiblement fixe (13).

2. Fausse paumelle selon la revendication 1, dans laquelle les moyens d'accouplement (11, 12) de la première partie de paumelle (4) à la seconde partie de paumelle (7) sont constitués par une lumière (11) ménagée dans la première partie de paumelle (4) apte à recevoir à coulissement un doigt (12) solidaire de la seconde partie de paumelle (7).

3. Fausse paumelle selon l'une quelconque des revendications 1 et 2, dans laquelle les moyens d'accouplement des deux parties de paumelle (4, 7) sont constitués par une biellette (15) secondaire articulée, par ses extrémités, à chacune des deux parties de paumelle.

4. Fausse paumelle selon la revendication 1, dans laquelle le premier élément d'articulation (5) est porté par une première extrémité d'un bras (14) articulée sur la biellette (10) selon un axe (10b) confondu avec un axe du premier élément d'articulation (5) et le bras (14) possède une deuxième extrémité apte à recevoir un doigt fixe (12a) porté par la seconde partie de paumelle (7).

5. Fausse paumelle selon la revendication 4, dans laquelle le bras (14) est articulé à une extrémité d'une biellette secondaire (15) ayant une extrémité opposée montée à pivotement sur la première partie de paumelle (4) autour d'un axe d'articulation (15a) situé entre le doigt (12a) et l'axe du premier élément d'articulation.

6. Véhicule comprenant une structure et un ouvrant relié à la structure par au moins une fausse paumelle selon l'une quelconque des revendications précédentes.

7. Véhicule selon la revendication 6, dans lequel les moyens d'accouplement susdits (11, 12, 12a, 15) sont déterminés pour que l'axe virtuel (13) de rotation de l'ouvrant (3) soit sensiblement confondu avec un bord avant (3a) de ce dernier.

8. Véhicule selon la revendication 6, dans lequel les moyens d'accouplement susdits (11, 12, 12a, 15) sont déterminés pour que l'axe virtuel (13) de rotation de l'ouvrant (3) soit sensiblement confondu avec un bord arrière de ce dernier.
